# EUROPÄISCHE PATENTSCHRIFT

(11) **EP 1 625 184 B1**
(45) Veröffentlichungstag und Bekanntmachung des Hinweises auf die Patenterteilung: **15.10.2008**
(21) Anmeldenummer: 04733819.9
(22) Anmeldetag: 19.05.2004
(51) Int. Cl.: C09D 5/08, C23F 11/14

(54) **KORROSIONSSCHUTZMITTEL UND DESSEN VERWENDUNG**
ANTICORROSIVE AGENT AND USE THEREOF
AGENT DE PROTECTION CONTRE LA CORROSION ET UTILISATION

(30) Priorität: 19.05.2003 DE 10322507
(43) Veröffentlichungstag der Anmeldung: 15.02.2006
(73) Patentinhaber: Fraunhofer-Gesellschaft zur Förderung der angewandten Forschung e.V., 80686 München (DE)
(72) Erfinder: WILKEN, Ralph, 26180 Rastede (DE); DIECKHOFF, Stefan, 28865 Lilienthal (DE); SEILER, Andreas, 28777 Bremen (DE); HARTWIG, Andreas, 27721 Ritterhude (DE); KOWALIK, Thomas, 28207 Bremen (DE)
(74) Vertreter: Pfenning, Meinig & Partner GbR
(86) Internationale Anmeldenummer: PCT/EP2004/005435
(87) Internationale Veröffentlichungsnummer: WO 2004/101692

(56) Entgegenhaltungen:
- DE-A- 10 143 521
- US-A- 4 812 503
- PATENT ABSTRACTS OF JAPAN Bd. 0060, Nr. 07 (C-087), 16. Januar 1982 (1982-01-16) -& JP 56 133341 A (TOSHIBA CHEM CORP), 19. Oktober 1981 (1981-10-19)
- PATENT ABSTRACTS OF JAPAN Bd. 0081, Nr. 10 (C-224), 23. Mai 1984 (1984-05-23) -& JP 59 023884 A (NITTO DENKI KOGYO KK), 7. Februar 1984 (1984-02-07)
- PATENT ABSTRACTS OF JAPAN Bd. 0082, Nr. 46 (C-251), 10. November 1984 (1984-11-10) -& JP 59 124964 A (TATSUTA DENSEN KK), 19. Juli 1984 (1984-07-19)
- DATABASE WPI Section Ch, Week 198603 Derwent Publications Ltd., London, GB; Class A97, AN 1986-016632 XP002299138 -& JP 60 238490 A (FUKOKU GUM KK) 27. November 1985 (1985-11-27)
- DATABASE WPI Section Ch, Week 198317 Derwent Publications Ltd., London, GB; Class A82, AN 1983-40875K XP002299139 -& JP 58 048697 A (KANSAI PAINT CO LTD) 22. März 1983 (1983-03-22)
- DATABASE WPI Section Ch, Week 198212 Derwent Publications Ltd., London, GB; Class E13, AN 1982-22805E XP002299140 & JP 57 026175 A (TATSUTA DENSEN KK) 12. Februar 1982 (1982-02-12)

## Beschreibung

Es wird ein Korrosionsschutzmittel insbesondere zum Schutz von Leichtmetallen, insbesondere Aluminium und Magnesium beschrieben. Das Mittel enthält mindestens einen Inhibitor in Form eines Salzes einer organischen Säure mit einer organischen oder anorganischen Base, wobei das Mittel Bestandteil eines Polymersystems ist. Bei der organischen Säure handelt es sich bevorzugt um eine heterozyklische Verbindung, die in der Lage ist, Schwermetalle, insbesondere Kupfer, zu komplexieren. Die Anwendung des Mittels kann sowohl in chemischen Bädern zur Behandlung der Metalle als auch eingearbeitet in einem Lack, einem Klebstoff, einem Primer, einer Vergussmasse, einer Dichtmasse oder einem andere Polymersystem erfolgen.

Leichtmetalle werden häufig durch den Aufbau einer Konversionsschicht vor Korrosion geschützt. Dazu werden die Metalle nach einem Reinigungsschritt in Konversionsbäder getaucht und schließlich gespült. Zum Stand der Technik wird beispielhaft auf WO 9967029, WO 9935307 und WO 9510641 verwiesen. Neben der aufwendigen Verfahrensführung und den erforderlichen Behandlungsbecken ist der Hauptnachteil einer derartigen Vorgehensweise der geringe Gehalt an inhibierend wirkenden Ionen in der Konversionsschicht. Hierdurch ist die schützende Wirkung zeitlich begrenzt. Ferner ist der Korrosionsschutz des Metalls an Stellen mit beschädigter Konversionsschicht aufgehoben. Wünschenswert wäre es, wenn eine auf dem Metall befindliche Schicht, z.B. ein Lack oder ein Klebstoff, ein Reservoir an korrosionsinhibierenden Substanzen beinhaltet. Dies ist besonders in den Fällen gewünscht, in denen es zu einer Verletzung der Beschichtung gekommen ist. Durch hinzukommendes Wasser kann der Inhibitor dann aus der Beschichtung gelöst und zu der verletzten Stelle transportiert werden, um dort inhibierend zu wirken. Dies wird konventionell durch zahlreiche verfügbare Korrosionsschutzpigmente erreicht. Beispiele seien hier Zinkphosphat, Bariummetaborat. Bei diesen Inhibitoren wird nur die anodische Teilreaktion der Korrosion inhibiert, nach allgemeiner Vorstellung wird die kathodische Teilreaktion nicht inhibiert. Bei der Kathode handelt es sich meist um Verunreinigungen oder Legierungsbestandteile, die edlere Schwermetalle enthalten.

Chromate, z.B. das Strontiumchromat, Bariumchromat oder Natriumchromat sind als besonders wirksame Inhibitoren bekannt. Nach gängiger Lehrmeinung sind sie in der Lage, die kathodische Teilreaktion zu inhibieren. Aufgrund ihrer hohen Toxizität sollen sie jedoch ersetzt werden und es ist daher das Ziel, mit Alternativstoffen die inhibierenden Eigenschaften der Chromate möglichst weitgehend zu erreichen.

In der DE 101 43 521 A1 ist ein Additionsprodukt beschrieben, das mittels einer Säure-Base-Reaktion aus Hexafluorokieselsäure und/oder Hexafluorotitansäure mit einer oder mehreren organischen Basen hergestellt wird. Es hat sich jedoch gezeigt, obwohl dieser Inhibitor gegenüber dem Stand der Technik schon Vorteile aufweist, noch Nachteile vorhanden sind. Insbesondere tritt bei länger andauerndem Angriff von korrosiven Medien noch kein genügender Schutz ein.

Aufgabe der Erfindung ist es deshalb, ein toxikologisch unbedenkliches Mittel zur Verfügung zu stellen, das insbesondere die kathodische Teilreaktion der Korrosion inhibiert und mit der zusätzlich eine dauerhafte Inhibierung möglich ist. Gleichzeitig soll das Mittel in einer Form zur Verfügung stehen, die es nicht nur erlaubt, das Mittel in chemischen Bädern einzusetzen, sondern auch in Polymere einzumischen.

Die Erfindung wird durch die kennzeichnenden Merkmale des Anspruchs 1 gelöst. Die Unteransprüche zeigen vorteilhafte Weiterbildungen auf Die Verwendung des Mittels ist in den Ansprüchen 13 bis 15 angegeben.

Das erfindungsgemäße Mittel enthält somit mindestens einen speziellen Inhibitor der ein Salz ist, herstellbar durch Reaktion einer organischen Säure und einer organischen Base.

Wesentliches Element dieser Erfindung ist, dass dieses Salz Bestandteil eines Polymersystems ist.

Erfindungsgemäß wird hierunter verstanden dass die Salzbildung so vorgenommen wird, dass die organische Base selbst an ein Polymer, Oligomer oder ein Monomer gebunden ist und dass dann die Salzbildung durch Reaktion mit der organischen Säure erfolgt. Ist die Base an ein Monomer gebunden, erfolgt nach der Salzbildung die Polymerisation. Bei den Monomeren handelt es sich bevorzugt um Vernetzer für Harze. Im Falle des Vernetzers erfolgt somit die Salzbildung zuerst, d.h. es wird der Vernetzer mit der funktionellen organischen Base mit der organischen Säure umgesetzt und dann im Anschluss wird der Vernetzer mit dem Harz zum Polymer umgesetzt.

Bevorzugt ist eine organische Säure, die in der Lage ist, Schwermetalle zu komplexieren. Die Aufgabe der organischen Base besteht darin, die organische Säure zu neutralisieren, die Metalloxidschicht zu stabilisieren und die bei' der anodischen Teilreaktion der Korrosion gebildete Säure zu neutralisieren.

Als organische Säuren eignen sich besonders heterozyklische Stickstoffverbindungen. Derartige Substanzen sind in der Lage, Schwermetalle, die als Legierungsbestandteil oder Verunreinigung in Leichtmetalllegierungen vorkommen, zu komplexieren und.damit die kathodische Teilreaktion der Korrosion zu blockieren. Geeignete organische Säuren, bei denen es sich um heterozyklische Stickstoffverbindungen handelt, sind insbesondere 1,2,4-Triazol oder substituierte 1,2,4-Triazole, 1,2,3-Triazol oder substituierte 1,2,3-Triazole, 1H-Benzotriazol oder substituierte 1H-Benzotriazole, bevorzugt 1H-Benzotriazol, 5-Methylbenzotriazol oder 5-Carboxybenzotriazol.

Als organische Basen kommen Basen gemäß einem der Ansprüche 6 bis 8 zum Einsatz.

Das erfindungsgemäße Mittel kann in Kombination mit anderen Korrosionsinhibitoren angewandt werden. Dies ist immer dann bevorzugt, wenn eine synergistische Wirkung bei dem spezifischen Anwendungsfall resultiert. Dies ist z.B. dann der Fall, wenn die kathodische Teilreaktion der Korrosion bereits durch kleine Mengen der erfindungsgemäßen Inhibitoren ausreichend inhibiert wird, diese Menge aber für die Inhibierung der anodischen Teilreaktion nicht ausreicht. In einem solchen Fall würde zusätzlich ein Inhibitor eingesetzt werden, der in der Lage ist, die anodische Teilreaktion zu inhibieren. Bevorzugt handelt es sich bei den Inhibitoren, mit denen die erfindungsgemäßen Mittel kombiniert werden, um Metallsalze auf Basis von Phosphonaten, Boraten, Vanadaten, Wolframaten und Phosphaten. Die genannten Anionen werden bevorzugt mit Kalium, Natrium, Zink, Barium, Strontium, Kalzium, Magnesium, Mangan, Kobalt, Nickel, Zinn, Zirkonium, Aluminium oder einem Seltenerdmetall als Kation verwendet.

Wie eingangs erläutert sieht die Erfindung vor, dass die organische Base selbst an das Polymer, Oligomer und/oder an ein Monomer gebunden ist. Bei den Polymeren kommen grundsätzlich die bereits vorstehend erwähnten Polymere wie Epoxidharze, Urethane, Acrylate, Alkylacetate oder Polyvinylacetat in Frage. Ein bevorzugtes Beispiel ist hierbei aminopropoxy-terminiertes Polyoxypropy-len.

Bei den Monomeren sind Vernetzer für Harze bevorzugt. In diesem Falle wird dann so vorgegangen, dass zuerst die Salzbildung mit der am Vernetzer gebundenen organischen Base und der organischen Säure vorgenommen wird und dass dann anschließend dieser so vorbehandelte Vernetzer mit einem Harz zum Polymer umgesetzt wird. Bevorzugt ist es hierbei, wenn eine Komponente des Systems z.B. die Aminokomponente eines aminisch härtenden Epoxydsystems die organische Base darstellt. Als Basen, die an einen Vernetzer angebunden werden können, kommen grundsätzlich alle Basen in Frage, wie sie bereits vorstehend beschrieben worden sind. Derartige Basen sind in den Patentansprüchen 6 bis 9 angeführt.

Die erfindungsgemäßen Mittel lassen sich aber auch in Konversionsbädern und anderen Flüssigkeiten zur Behandlung von Leichtmetalloberflächen einsetzen. Hierbei haben sie den Vorteil, dass zusätzlich zur Inhibierung der anodischen Teilreaktion der Korrosion eine Inhibierung der kathodischen Teilreaktion durch die Konversionsschicht erfolgen kann. Im Falle des Einsatzes in einem chemischen Bad können die erfindungsgemäßen Mittel auch intermediär durch Eintrag der entsprechenden Komponenten in das Bad hergestellt werden. Die Anwendung zum Korrosionsschutz von Leichtmetallen erfolgt bevorzugt für Aluminium und Magnesium und deren Legierungen. Besonders bevorzugt erfolgt die Anwendung auf den besonders korrosionskritischen kupferhaltigen Legierungen, wie z.B. die Aluminiumlegierung AA2024. Aufgrund der hohen Festigkeit werden kupferhaltige Aluminiumlegierungen beispielsweise vielfach im Flugzeugbau oder im Automobilbau eingesetzt. Der Flugzeugbau und der Automobilbau sind demnach bevorzugte Anwendungsgebiete der erfindungsgemäßen Inhibitoren. Die Anwendung kann hier sowohl in Behandlungsflüssigkeiten für die Bauteil erfolgen als auch in Lacken, Primern, Klebstoffen, Dichtstoffen oder Vergussmassen.

Die Wirksamkeit der erfindungsgemäßen Inhibitoren kann z.B. dadurch nachgewiesen werden, dass sie zusammen mit einer korrodierend wirkenden Substanz in Wasser gelöst werden und man die entstehende Lösung auf die zu schützenden Metalle einwirken lässt. Um eine ausreichende Differenzierung zu erreichen, sollte der Gehalt der korrodierend wirkenden Substanz höher sein als der des Inhibitors. Ein entsprechender Versuch ist in Beispiel 6 für Aluminium AA2024, Magnesium AZ31B und Magnesium AM50 beschrieben. Zum Vergleich wird die Wirksamkeit von Natriumchromat als konventioneller Inhibitor überprüft. In einem weiteren Vergleichsversuch wird die korrodierende Wirkung einer nicht mit einem Inhibitor versehenen Natriumchloridlösung bestimmt. Chromate, z.B. das Natriumchromat sind als besonders wirksame Inhibitoren bekannt. Aufgrund ihrer hohen Toxizität sollen sie jedoch ersetzt werden und es ist daher das Ziel, mit Alternativstoffen die inhibierenden Eigenschaften der Chromate möglichst weitgehend zu erreichen. Die Ergebnisse zeigen, dass die erfindungsgemäßen Inhibitoren dem Chromat ebenbürtig sind.

### Beispiele (Vergleich)

### Beispiel 1

### Synthese von 1H-Benzotriazol N-Methylmorpholin Salz

Es werden 595 mg 1H-Benzotriazol in 2 ml Isopropanol gelöst und unter Rühren 505 mg N-Methylmorpholin im Verlauf von 5 Minuten eingetragen. Nach beendeter Zugabe des N-Methylmorpholins wird die Lösung eingeengt. Man erhält ca. 1,1 g des Produkts.

### Beispiel 2

### Synthese von 1H-Benzotriazol Morpholin Salz

Es werden 595 mg 1H-Benzotriazol in 2 ml Isopropanol gelöst und unter Rühren 436 mg N-Methylmorpholin im Verlauf von 5 Minuten eingetragen. Nach beendeter Zugabe des Morpholins wird die Lösung eingeengt. Man erhält ca. 0,9 g des Produkts.

### Beispiel 3

### Synthese eines Gemisches aus 1H-Benzotriazol Natrium Salz und Natriumdihydrogenphosphat

Es werden 710 mg Dinatriumhydrogenphosphat in 2 ml Wasser gelöst und unter Rühren 595 mg 1H-Benzotriazol im Verlauf von 5 Minuten eingetragen. Nach beendeter Zugabe des Benzotriazols wird die Lösung eingeengt und das Produkt im Vakuum bis zur Gewichtskonstanz getrocknet.

### Beispiel 4

### Synthese von 1H-Benzotriazol Triethanolamin Salz

Es werden 595 mg 1H-Benzotriazol in 2 ml Isopropanol gelöst und unter Rühren 745 mg Triethanolamin im Verlauf von 5 Minuten eingetragen. Nach beendeter Zugabe des Triethanolamin wird die Lösung eingeengt. Man erhält ca. 1,3 g des Produkts.

### Beispiel 5

### Synthese eines Gemisches aus 1H-1,2,4-Triazol Natrium Salz und Natriumdihydrogenphosphat

Es werden 710 mg Dinatriumhydrogenphosphat in 2 ml. Wasser gelöst und unter Rühren 345 mg 1H-1,2,4-Triazol im Verlauf von 5 Minuten eingetragen. Nach beendeter Zugabe des Triazols wird die Lösung eingeengt und das Produkt im Vakuum bis zur Gewichtskon-stanz getrocknet.

### Beispiel 6

### Prüfen der korrosionsinhibierenden Eigenschaften

Die Prüfung der korrosionsinhibierenden Eigenschaften erfolgt durch Auftropfen eines korrosiven Mediums auf ein Leichtmetall. Dazu wird das Metall zuvor mit Hilfe eines mechanischen Fräsers für Aluminium und NE-Metalle definiert verletzt (Abtrag ca. 0,2 mm). Die so hergestellte frische Metalloberfläche lagert man mindestens 3 Tage an Raumluft bei Raumtemperatur.

Auf die so präparierte Metalloberfläche wird die Prüflösung aufgetropft. Die Prüflösung besteht aus 3% Natriumchlorid als korrodierend wirkende Substanz und 0,1 % des jeweiligen Inhibitors in reinstem Wasser. Als Proben wurden Aluminium AA2024, Magnesium AM50 und Magnesium AZ31 verwendet.

Neben Beispielen der erfindungsgemäßen Korrosionsinhibitoren wurden konventionelle Korrosionsinhibitoren und eine Lösung ohne Korrosionsinhibitor als Vergleichsbeispiele geprüft. Die Bewertung des Korrosionsfortschritts erfolgt mit Hilfe der Photoelektronenspektroskopie.

| Inhibitor | Beispiel | Dauer | Aluminium AA2024 | Magnesium AZ31B | Magnesium AM50 |
|---|---|---|---|---|---|
| Ohne | Vergleich | 2 Std. | Stark oxidiert | Stark oxidiert | Stark oxidiert |
| Natriumchromat | Vergleich | 14 Tage | Nicht oxidiert | Schwach oxidiert | Schwach oxidiert |
| 1H-Benzotriazol N-Methylmorpholin Salz | Beispiel 1 | 14 Tage | Nicht oxidiert | Schwach oxidiert | Schwach oxidiert |
| 1H-Benzotriazol Morpholin Salz | Beispiel 2 | 14 Tage | Schwach oxidiert | Schwach oxidiert | Schwach oxidiert |
| 1H-Benzotriazol Natrium Salz + Natriumdihydrogenphosphat | Beispiel 3 | 14 Tage | Nicht oxidiert | Schwach oxidiert | Schwach oxidiert |
| 1H-1,2,4-Triazol Natrium Salz + Natriumdihydrogenphosphat | Beispiel 4 | 14 Tage | Nicht oxidiert | Schwach oxidiert | Schwach oxidiert |
| 1H-Benzotriazol Triethanolamin Salz | Beispiel 5 | 14 Tage | Nicht oxidiert | Schwach oxidiert | Schwach oxidiert |

### Beispiel (Erfindungsgemäß) :

### Synthese eines Gemisches aus einem Aminhärter und dem Salz des Benzotriazols und des Aminhärters, Herstellung eines 2K-Epoxidklebstoffs daraus

600 mg 1H-Benzotriazol werden mit 7,6 g eines aminoterminierten Polyoxypropylen mit einem gewichtsmittleren Molekulargewicht von 400 g/mol bei Raumtemperatur für 30 min. gerührt und zur Reaktion gebracht. Man erhält ein Produkt bestehend aus dem aminoterminierten Polyoxypropylen und dem Salz des Benztriazols und des aminoterminierten Polyoxypropylens.
Dieses Produkt wird mit 11,8 g des Diglycidylethers des Bisphenol A gemischt, auf Aluminiumsubstrate AA2024 aufgebracht und bei 120 °C für 30 Minuten gehärtet, so dass eine Klebung entsteht. Diese Klebung wird durch Auslagerung in 60 °C heißem Wasser für 4 Wochen gealtert und die Zugscherfestigkeit geprüft. Auf den Bruchflächen lässt sich keine Unterwanderung der Klebung durch Korrosion feststellen.

## Patentansprüche

1. Korrosionsschutzmittel enthaltend mindestens ein Salz gebildet aus einer organischen Säure und einer organischen Base, **dadurch gekennzeichnet, dass** das Salz mit einem Polymer verbunden ist, wobei zur Salzbildung eine organische Base die an ein Polymer, Oligomer oder Monomer gebunden ist, eingesetzt wird.

2. Mittel nach Anspruch 1, **dadurch gekennzeichnet, dass** die organische Säure eine heterozyklische Verbindung ist, die ausgewählt ist aus Triazolen.

3. Mittel nach Anspruch 2, **dadurch gekennzeichnet, dass** die organische Säure 1,2,4-Triazol und/oder ein substituiertes 1,2,4-Triazol und/oder 1,2,3-Triazol und/oder ein substituiertes 1,2,3 Triazol ist.

4. Mittel nach mindestens einem der Ansprüche 1 bis 2, **dadurch gekennzeichnet, dass** die organische Säure ausgewählt ist aus 1H-Benzotriazol, sudstituiertes 1H-Benzotriazol, bevorzugt 1 H-Benzotriazol, 5-Methylbenzotriazol oder 5-Carboxybenzotriazol oder deren Mischung.

5. Mittel nach mindestens einem der Ansprüche 1 bis 4, **dadurch gekennzeichnet, dass** die organische Base eine heterozyklische Verbindung ist.

6. Mittel nach Anspruch 5, **dadurch gekennzeichnet, dass** die organische Base ausgewählt ist aus Morpholin, substituiertes Morpholin, bevorzugt 4-Methylmorpholin, 4-Ethylmorpholin oder 4-Phenylmorpholin oder Mischung hiervon.

7. Mittel nach mindestens einem der Ansprüche 1 bis 6, **dadurch gekennzeichnet, dass** die organische Base ein Amin ist.

8. Mittel nach Anspruch 7, **dadurch gekennzeichnet, dass** die organische Base ausgewählt ist aus Aminoethanol, 3-Aminopropanol, 2-Aminopropanol, 2-Aminobutanol, 3-Aminobutanol oder Ether des Aminoethanol, 3-Aminopropanol, 2-Aminopropanol, 2-Aminobutanol, 3-Aminobutanol oder substituierte Produkte dieser Verbindungen oder Mischung hiervon.

9. Mittel nach mindestens einem der Ansprüche 1 bis 8, **dadurch gekennzeichnet, dass** das Polymer ein Klebstoff, Lack, Primer oder Vergussmasse ist.

10. Mittel nach einen der Ansprüch 1-8, **dadurch gekennzeichnet, dass** das Polymer ein Harz ist.

11. Mittel nach einen der Ansprüch 1-8, **dadurch gekennzeichnet, dass** das Oligomer oder Monomer ein Vernetzer für Harze ist.

12. Mittel nach Anspruch 11, **dadurch gekennzeichnet, dass** der Vernetzer aus Aminen, Epoxiden und Isocyanaten ausgewählt ist.

13. Mittel nach mindestens einem der Ansprüche 1 bis 15, **dadurch gekennzeichnet, dass** es zusätzliche Korrosionsinhibitoren, bevorzugt auf Basis von Phosphaten, Boraten, Vanadaten, Wolframaten und Phosphonaten, enthält.

14. Verwendung des Mittels nach mindestens einem der Ansprüche 1 bis 13 zum Schutz von Leichtmetallen.

15. Verwendung nach Anspruch 14 zum Korrosionsschutz von kupferhaltigen oder eisenhaltigen oder kobalthaltigen oder nickelhaltigen Leichtmetalllegierungen.

16. Verwendung nach Anspruch 14 zum Korrosionsschutz im Flugzeugbau oder Automobilbau.

## Claims

1. An anti-corrosion agent containing at least one salt formed from an organic acid and an organic base, **characterised in that** the salt is joined to a polymer, an organic base which is bound to a polymer, oligomer or monomer being used for salt formation.

2. An agent according to Claim 1, **characterised in that** the organic acid is a heterocyclic compound which is selected from triazoles.

3. An agent according to Claim 2, **characterised in that** the organic acid is 1,2,4-triazole and/or a substituted 1,2,4-triazole and/or 1,2,3-triazole and/or a substituted 1,2,3-triazole.

4. An agent according to at least one of Claims 1 to 2, **characterised in that** the organic acid is selected from 1H-benzotriazole, substituted 1H-benzotriazole, preferably 1H-benzotriazole, 5-methylbenzotriazole or 5-carboxybenzotriazole or a mixture thereof.

5. An agent according to at least one of Claims 1 to 4, **characterised in that** the organic base is a heterocyclic compound.

6. An agent according to Claim 5, **characterised in that** the organic base is selected from morpholine, substituted morpholine, preferably 4-methylmorpholine, 4-ethylmorpholine or 4-phenylmorpholine or a mixture thereof.

7. An agent according to at least one of Claims 1 to 6, **characterised in that** the organic base is an amine.

8. An agent according to Claim 7, **characterised in that** the organic base is selected from aminoethanol, 3-aminopropanol, 2-aminopropanol, 2-aminobutanol, 3-aminobutanol or ethers of aminoethanol, 3-aminopropanol, 2-aminopropanol, 2-aminobutanol, 3-aminobutanol or substituted products of these compounds or a mixture thereof.

9. An agent according to at least one of Claims 1 to 8, **characterised in that** the polymer is an adhesive, painted coating, primer or potting compound.

10. An agent according to one of Claims 1 to 8, **characterised in that** the polymer is a resin.

11. An agent according to one of Claims 1 to 8, **characterised in that** the oligomer or monomer is a cross-linking agent for resins.

12. An agent according to Claim 11, **characterised in that** the cross-linking agent is selected from amines, epoxides and isocyanates.

13. An agent according to at least one of Claims 1 to 15, **characterised in that** it contains additional corrosion inhibitors, preferably based on phosphates, borates, vanadates, tungstates and phosphonates.

14. Use of the agent according to at least one of Claims 1 to 13 for protecting light metals.

15. Use according to Claim 14 for protecting copper-containing or iron-containing or cobalt-containing or nickel-containing light metal alloys from corrosion.

16. Use according to Claim 14 for protection against corrosion in aircraft construction or automobile construction.

## Revendications

1. Agent anti-corrosion contenant au moins un sel formé d'un acide organique et d'une base organique, **caractérisé en ce que** le sel est lié à un polymère, dans lequel on utilise pour la formation du sel une base organique qui est liée à un polymère, à un oligomère ou à un monomère.

2. Agent selon la revendication 1, **caractérisé en ce que** l'acide organique est un composé hétérocyclique qui est choisi parmi les triazoles.

3. Agent selon la revendication 2, **caractérisé en ce que** l'acide organique est le 1,2,4-triazole et/ou un 1,2,4-triazole substitué et/ou le 1,2,3-triazole et/ou un 1,2,3-triazole substitué.

4. Agent selon au moins l'une quelconque des revendications 1 à 2, **caractérisé en ce que** l'acide organique est choisi parmi le 1H-benzotriazole, le 1H-benzotriazole substitué, de préférence le 1H-benzotriazole, le 5-méthylbenzotriazole ou le 5-carboxybenzotriazole ou leur mélange.

5. Agent selon au moins l'une quelconque des revendications 1 à 4, **caractérisé en ce que** la base organique est un composé hétérocyclique.

6. Agent selon la revendication 5, **caractérisé en ce que** la base organique est choisie parmi la morpholine, la morpholine substituée, de préférence la 4-méthyhnorpholine, la 4-éthylmorpholine ou la 4-phénylmorpholine ou leur mélange.

7. Agent selon au moins l'une quelconque des revendications 1 à 6, **caractérisé en ce que** la base organique est une amine.

8. Agent selon la revendication 7, **caractérisé en ce que** la base organique est choisie parmi l'aminoéthanol, le 3-aminopropanol, le 2-aminopropanol, le 2-aminobutanol, le 3-aminobutanol ou l'éther d'aminoéthanol, de 3-aminopropanol, de 2-aminopropanol, de 2-aminobutanol, de 3-aminobutanol ou les produits substitués de ces composés ou un mélange de ceux-ci.

9. Agent selon au moins l'une quelconque des revendications 1 à 8, **caractérisé en ce que** le polymère est une colle, un vernis, une couche de fond ou une masse de scellage.

10. Agent selon l'une quelconque des revendications 1 à 8, **caractérisé en ce que** le polymère est une résine.

11. Agent selon l'une quelconque des revendications 1 à 8, **caractérisé en ce que** l'oligomère ou le monomère est un agent de réticulation pour résines.

12. Agent selon la revendication 11, **caractérisé en ce que** l'agent de réticulation est choisi parmi les amines, les époxydes et les isocyanates.

13. Agent selon au moins l'une quelconque des revendications 1 à 15, **caractérisé en ce qu'**il contient des inhibiteurs de corrosion supplémentaires, de préférence à base de phosphates, de borates, de vanadates, de tungstates et de phosphonates.

14. Utilisation de l'agent selon au moins l'une quelconque des revendications 1 à 13 pour la protection de métaux légers.

15. Utilisation selon la revendication 14 pour protéger de la corrosion les alliages de métaux légers contenant du cuivre ou du fer ou du cobalt ou du nickel.

16. Utilisation selon la revendication 14 pour protéger de la corrosion dans la construction aéronautique ou automobile.
